# EUROPÄISCHE PATENTSCHRIFT

(11) **EP 0 680 979 B1**
(45) Veröffentlichungstag und Bekanntmachung des Hinweises auf die Patenterteilung: **22.10.1997**
(21) Anmeldenummer: 95106149.8
(22) Anmeldetag: 25.04.1995
(51) Int. Cl.: C08F 297/02, C09J 153/00

(54) **Klebstoffe auf Basis anionisch polymerisierter Styrol/Butadien-Copolymerisate**
Adhesive based on anionically polymerized styrene/butadiene copolymer
Adhésif à base de copolymère styrène/butadiène polymérisé anioniquement

(30) Priorität: 03.05.1994 DE 4415448
(43) Veröffentlichungstag der Anmeldung: 08.11.1995
(73) Patentinhaber: BASF AKTIENGESELLSCHAFT, 67056 Ludwigshafen (DE)
(72) Erfinder: Knoll, Konrad, Dr., D-67069 Ludwigshafen (DE); Schumacher, Gerhard, Dr., D-69118 Heidelberg (DE); Dittrich, Uwe, Dr., D-67056 Ludwigshafen (DE)

(56) Entgegenhaltungen:
- EP-A- 0 076 539
- EP-A- 0 082 399
- EP-A- 0 569 100
- WO-A-92/01432
- GB-A- 1 156 300
- GB-A- 2 267 284
- US-A- 4 659 784

## Beschreibung

Die Erfindung betrifft ein anionisch polymerisiertes Copolymerisat, aufgebaut aus
a) 10 bis 90 Gew.-% eines Vinylaromaten,
b) 10 bis 90 Gew.-% eines konjugierten Diens und
c) 0 bis 30 Gew.-% weiteren Monomeren,
mit einem zahlenmittleren Molekulargewicht Mₙ von 2.000 bis 250.000 und einem Gehalt an Homopolymerblöcken mit einem Molgewicht größer als ¹/₂₀ des zahlenmittleren Molekulargewichts unter 40 Gew.-%, bezogen auf das Copolymerisat.

Eine Vielzahl unterschiedlicher Polymere, z.B. auf Basis von Naturkautschuk, Polyolefine, Polyvinylether, Polyacrylate oder Styrol/Butadien-Copolymerisate können als Polymerbasis für Klebstoffe Verwendung finden. Im allgemeinen liegen diese Polymeren in Form von Dispersionen oder Lösungen vor. Zur Einstellung einer ausreichenden Klebrigkeit werden diesen Dispersionen oder Lösungen üblicherweise sogenannte klebrigmachende Harze, z.B. Kolophoniumharz, beigemischt.

Aus der US-A-3 935 338, der US-A-4 728 572 und der EP-A-318 217 sind Schmelzhaftklebstoffe auf Basis von Styrol/Butadienblockcopolymerisaten bekannt. Die Schmelzhaftklebstoffe sind zwar weitgehend frei von organischen Lösungsmitteln, es ist jedoch ein Zusatz von klebrigmachenden Harzen notwendig. Die Anzahl notwendiger Mischungskomponenten und Additive für Klebstoffe soll aus Kostengründen und zur Arbeitsersparnis möglichst gering sein.

Aufgabe der vorliegenden Erfindung waren daher Klebstoffe, welche im wesentlichen lösungsmittelfrei sind und auch ohne Zusatz von klebrigmachenden Harzen eine ausreichende Klebrigkeit aufweisen.

Demgemäß wurde das eingangs definierte Copolymerisat gefunden.

Das oben definierte Copolymerisat enthält bevorzugt
a) 30 bis 70 Gew.-%, besonders bevorzugt 40 bis 70 Gew.-% eines Vinylaromaten,
b) 30 bis 70 Gew.-%, besonders bevorzugt 30 bis 60 Gew.-% eines konjugierten Diens und
c) 0 bis 20 Gew.-%, besonders bevorzugt 0 bis 10 Gew.-% weiteren Monomeren.

Als Vinylaromaten eignen sich Styrol, alkylsubstituierte Styrole wie p-Methylstyrol, p-tert-Butylstyrol, alkoxysubstituierte Styrole wie p-Methoxystyrol, silylierte Styrole wie p-Styrol, Vinylnaphthalin und alkylsubstituierte Alkylnaphthaline, α-Methylstyrol und kernalkylierte α-Methylstyrole, Copolymere mit 1,1-Diphenylethylen und dessen alkylierte Derivate und Vinylpyridine sowie Mischungen der zuvor genannten Monomeren. Bevorzugtes Monomer ist Styrol.

Als konjugierte Diene eignen sich 1,3-Butadien, Isopren, 1,3-Pentadien, 1,3-Oktadien, Piperylen, Methylpentadien, Phenylbutadien, 2,3-Dimethylbutadien, 3,4-Dimethyl-1,3-hexadien, 4,5-Diethyl-1,3-oktadien sowie Mischungen dieser Monomeren. Bevorzugtes Monomer ist 1,3-Butadien.

Weitere Monomere können z.B. solche sein, die sich bei der anionischen Polymerisation copolymerisieren lassen.

Genannt seien z.B. 2-, 3- oder 4-Vinylpyridin, Dialkylaminostyrole, 1,1-Diphenylethylen, Dialkylamino-1,1-diphenylethylen. Funktionelle Gruppen, wie Carboxyl-, Hydroxy-, Silanol-, Amino-und Carbonsäureanhydridgruppen lassen sich direkt durch Copolymerisation von entsprechenden Monomeren in das Copolymerisat einführen.

Die vorstehend genannten funktionellen Gruppen lassen sich auch in das Copolymerisat einführen, indem geeignete Monomere eingesetzt werden, die dann durch entsprechende Umsetzungen funktionalisiert werden können.

Eine Carboxylgruppe pro lebendes Kettenende läßt sich gezielt einführen, wenn man das lebende Polymer zuerst mit einem Äquivalent 1,1-Diphenylethylen endgruppenmodifiziert, dann mit CO₂ umsetzt und protisch aufarbeitet. Eine beliebige Zahl an endständigen Carboxylgruppen kann über die Blockcopolymerisation mit tert. tert.-Butylmethacrylat eingebaut werden. Hierzu wird das mit 1,1-Diphenylethylen modifizierte, lebende Polymer mit der gewünschten Anzahl an Äquivalenten tert. tert.-Butylmethacrylat bei -20 bis 60°C umgesetzt und aus dem Poly-t-butylmethacrylatblock entweder thermisch bei 180 bis 200°C oder sauer katalysiert mit z.B. 0,1 Äquivalente p-Toluolsulfonsäure pro Äquivalente t-Bumethacrylat bei 80 bis 100°C Isobuten unter Bildung von Polymethacrylsäure abgespalten oder in Gegenwart verdünnter wäßriger Protonsäuren verseift.

Hydroxylendgruppen können direkt durch die Umsetzung des lebenden Polymer mit Ethylenoxid oder Propylenoxid z.B. zum Lithiumalkoholat und anschließender protischen Aufarbeitung z.B: mit Alkoholen oder Wasser eingeführt werden. Eine interessante Variante stellt die Umsetzung der carbanionischen Kettenenden mit Oligoepoxiden wie dem Tetraglycidylether des Pentaerythrits dar, wobei äquimolare Mengen bevorzugt sind, um die Kopplung möglichst zurückzudrängen. Die verbleibenden Epoxygruppen können anschließend mit Ammoniak oder primären oder sekundären Aminen unter Bildung der entsprechenden Ethanolamine geöffnet werden.

Aminoendgruppen können durch Umsetzung des lebenden Polymers mit Iminen wie Benzylidenanilin und dessen kernalkylierte Derivate und Benzylidentrimethylsilylamin zum Amid und anschließender Protolyse zum sekundären bzw. primären Amin eingeführt werden. Die Amine lassen sich weiter mit Epoxiden und Säureanhydriden zu Ethanolaminen bzw. Säureamiden umsetzen. Durch die Verwendung von Di- oder Oligoanhydriden wie Pyromellitsäurenanhydrid oder Copolymere von Maleinsäureanhydrid im Molverhältnis 1:1 sind anhydridterminierte Polymere zugänglich.

Diaminopropylenendgruppen sind durch die Umsetzung des lebenden Polymers mit Propylendiaziridin und anschließende saure Aufarbeitung unter Freisetzung von Formaldehyd zugänglich. Da lendiaziridin selbst unter anionischen Bedingungen polymerisiert, können durch den Einatz der gewünschten Zahl an Äquivalenten Propylendiaziridin propylenverknüpfte Oligo- oder Polyhydrazine als Endgruppen eingeführt werden.

Verschiedene funktionelle Gruppen lassen sich im gleichen Polymermolekül kombinieren. Eine interessante Kombination aus Amino- und Carboxylgruppen ist durch Copolymerisation der o.g. tertiäre Aminogruppen tragenden Monomere und nachfolgender Blockpolymerisation mit t-Butylmethacrylat und thermischer Abspaltung von Isobuten zugänglich. Das so hergestellte Polymer verhält sich wie ein Betain und eignet sich für die Herstellung von Sekundärdispersionen.

Bevorzugt enthält das Copolymerisat Carboxylgruppen als funktionelle Gruppen. Besonders bevorzugt beträgt das Verhältnis von Gesamtmolmasse und der Anzahl der Carboxylgruppen im Molekül 0,2 bis 1 Carboxylgruppen je 1.000 g Copolymerisat.

Das zahlenmittlere Molgewicht Mₙ des Copolymerisats beträgt 2.000 bis 250.000, bevorzugt 4.000 bis 60.000 und besonders bevorzugt 5.000 bis 40.000.

Das Molgewicht Mₙ wird bestimmt durch Gelpermeationschromatographie, wobei aus einem Polystyrolstandard und einem Polybutadienstandard der Firma Polymer Laboratories ein Mischstandard entsprechend dem Polystyrol- und Polybutadiengehalt der Probe hergestellt wurde (s. G. Glöckner, "Polymercharakterisierung durch Flüssigkeitschromatographie", Heidelberg 1982). Die Messung erfolgte mit einer 0,25 gew.%igen Lösung in Tetrahydrofuran bei 23°C und einer Flußrate von 1,2 ml/min.

Der Gehalt an Homopolymerblöcken mit einem Molgewicht über ¹/₂₀, bevorzugt über ¹/₄₀ des vorstehend genannten zahlenmittleren Molekulargewichts Mₙ liegt, soweit ein solcher Gehalt überhaupt gegeben ist, unter 40 Gew.-%, vorzugsweise unter 20 Gew.-%, besonders bevorzugt unter 10 Gew.-%, bezogen auf das Copolymerisat. Besonders bevorzugt ist das Copolymerisat im wesentlichen statistisch aufgebaut.

Die Glasübergangstemperatur Tg des Copolymerisats liegt vorzugsweise unter 0°C, besonders bevorzugt unter -10°C. Die übergangstemperatur des Copolymerisats läßt sich nach üblichen Methoden wie Differentialthermoanalyse oder Differential Scanning Calorimetrie (s. z.B. ASTM 3418/82, sog. "midpoint temperature") bestimmen.

Die Herstellung des Copolymerisats erfolgt durch anionische Polymerisation. Die Uneinheitlichkeit des so hergestellten Copolymerisats ist im allgemeinen gering.

Der Quotient M_{w}/Mₙ beträgt vorzugsweise 1 bis 1,5, besonders bevorzugt 1 bis 1,2.

M_{w} das gewichtsmittlere Molekulargewicht und Mₙ werden dabei bestimmt durch Gelpermeationschromatographie wie oben beschrieben.

Die Polymerisation wird z.B. in Lösung in Gegenwart eines Initiators für die anionische Polymerisation durchgeführt. Als Initiatoren eignen sich z.B. Lithiumorganyle vom Typ R(Li)ₙ, wobei R ein aliphatisches, cycloaliphatisches, aromatisches oder alkylsubstituiertes aromatischesn-wertiges Kohlenwasserstoffradikal bedeutet und n eine ganze Zahl von 1 bis 10 sei. Beispiele für solche Lithiumorganyle sind Methyllithium, Ethyllithium, n-Propyllithium, i-Propyllithium, n-Butyllithium, s-Butyllithium, t-Butyllithium, Phenyllithium, Benzyllithium, 1,4-Dilithiobutan, 1,4-Dilithio-1,1,4,4-tetraphenylbutan und dessen kernalkylierte Derivate, 1,4-Dilithio-2,3-dialkyl-1,4 diphenylbutan, wobei Alkyl, Methyl, Ethyl, Propyl, Butyl, Hexyl, Heptyl, Oktyl oder Isooktyl bedeutet. Ebenfalls eignet sich Dilithiostilben und Dilithiodiphenylacetylen. Geeignet sind auch Natriumnaphthalin und dessen Derivate. Bevorzugt sind n-Butyllithium und s-Butyllithium als Initiatoren.

Es ist bekannt, daß die Copolymerisationsparameter der anionischen Polymerisation von Vinylaromaten und konjugierten Diolefinen stark lösungsmittelabhängig sind. In unpolaren Kohlenwasserstoffen wird aus einem Styrol-Butadien-Gemisch heraus bevorzugt Butadien polymerisiert. Man erhält in diesem Fall ein Butadien-Styrol-Blockcopolymer mit einem sogenannten verschmierten Übergang, d.h., in einer begrenzten Segmentlänge entlang der Polymerkette liegt ein statistisches Copolymer vor. In koordinierenden Lösungsmitteln kehren sich die Copolymerisationsparameter um und man erhält ebenfalls Blöcke, allerdings polymerisiert hier Styrol zuerst. Weiter ist zu beachten, daß in unpolaren Medien die Dienkomponente bevorzugt in 1,4-Konfiguration addiert wird, in polaren hingegen in 1,2-Konfiguration. 1,4-Polybutadien hat eine Glasübergangstemperatur von ca. -100°C, 1,2-Polybutadien hingegen von -20°C.

Eine weitgehend statistische Copolymerisation unter anionischen Bedingungen läßt sich jedoch dann erreichen, wenn zu einem unpolaren Lösungsmittel ein bestimmter Anteil, insbesondere 0,01 bis 5 Gew.-%, eines polaren Modifikators zugesetzt wird. Derartige Modifikatoren sind z.B. lineare Ether wie Diethylether, Dimethylether, Ethylmethylether, Dipropylether, Diisopropylether, Dibutylether, Methyltertiärbutylether, Dimethoxyethan, Dimethoxypropan, Diemethoxybutan, Diethoxyethan, Diethylenglykoldimethylether, Diethylenglykoldiethylether, Anisol, Ethoxystyrol und Dimethylkresylether, cyclische Ether wie Tetrahydrofuran, 1,4-Dioxan, Furfurylmethylether, Kronenether wie 18-Krone-6 und Dibenzo-18-Krone-6, tertiäre Amine wie Trimethylamin, Triethylamin, Tripropylamin, Tributylamin, Dimethylanilin, Diethylanilin, Pyridin und Tetramethylethylendiamin und Alkoholate wie Kaliumtertiärbutanolat, Lithiumtertiärbutanolat, Lithium-2,6-Ditertiärbutylphenolat. Bevorzugt ist Tetrahydrofuran.

Als unpolare Lösungsmittelkomponente eignen sich z.B. aliphatische oder aromatische Kohlenwasserstoffe wie Cyclopentan, Cyclohexan, Methylcyclohexan, Benzol und Methylbenzole, sowie deren Mischungen gegebenenfalls auch mit n-Alkanen. Besonders bevorzugt sind Cyclohexan und Methylcyclohexan.

Eine statistische Copolymerisation läßt sich dann erzielen, wenn das Monomerengemisch aus Vinylaromat und konjugiertem Dien so langsam zum vorgelegten Gemisch aus Initiator, Lösungsmittel und Modifikator gegeben wird, daß die Monomeren fortlaufend abreagieren und sich kein Monomer anreichert.

Die Polymerisationstemperatur kann z.B. zwischen -30 und +140°C liegen, bevorzugt zwischen +30 und 100°C und besonders bevorzugt zwischen 60 und 70°C.

Bei der anionischen Polymerisation werden lebende Copolymerisate erhalten, d.h. die Polymerisation kann nach Zusatz gewünschter Monomerer fortgesetzt werden. Auf diese Weise lassen sich endständige, funktionalisierte Monomere, wie bereits voranstehend beschrieben, in das Polymer einführen.

Die Polymerisation kann auch so geführt werden, daß die Zusammensetzung aus den Monomeren a), b) und c) in den Polymerketten nicht gleichmäßig ist, sondern Anteile mit höherer Tg, z.B. durch einen höheren Styrolgehalt (Hartphase) auf solche mit tieferer Tg, z.B. durch einen geringeren Styrolgehalt (Weichphase) folgen.

Nach Beendigung der Reaktion wird vorzugsweise protisch, z.B. mit Wasser/CO₂ aufgearbeitet, Säure gegebenenfalls neutralisiert und ausgewaschen und anschließend das Polymer gegebenenfalls vom Lösungsmittel befreit.

Die erhaltenen Copolymerisate werden als Klebstoff, vorzugsweise als Haftklebstoff, besonders bevorzugt als Schmelzhaftklebstoff verwendet.

Zur Verwendung als Schmelzhaftklebstoff wird das bei der Copolymerisation gegebenenfalls eingesetzte Lösungsmittel weitgehend, vorzugsweise bis zu einem Gehalt unter 5 Gew.-%, besonders bevorzugt unter 0,05 Gew.-%, bezogen auf das Copolymerisat, entfernt. Der Zusatz von Tackifiern ist im allgemeinen nicht notwendig, da das Copolymerisat sowohl eine sehr gute Adhäsion (guter Tack) als auch eine sehr gute Kohäsion (innere Festigkeit, gute Scherfestigkeit) zeigt.

Auch die Mitverwendung eines Weichmachers ist im allgemeinen nicht notwendig.

Additive, die zugesetzt werden können, sind z.B. Mineralöle, Phthalate, Kolophoniumharze und andere Tackifier.

Zur Erzielung besonderer Eigenschaften können auch Mischungen der anionisch polymerisierten Copolymerisate mit unterschiedlichen Molgewichten Verwendung finden. So eignen sich als gangskomponenten für solche Mischungen z.B. Copolymerisate A) mit einem Molekulargewicht Mₙ von 2.000 bis 20.000, vorzugsweise von 5.000 bis 15.000 einerseits und Copolymerisat B) mit einem Mₙ von 20.000 bis 250.000, vorzugsweise von 20.000 bis 100.000 andererseits, wobei Mₙ von Copolymerisat B mindestens 5.000 höher ist als von Copolymerisat A.

Die Anteile der Copolymerisate A) und B) können nach Wunsch variiert werden. Im allgemeinen betragen die Anteile jeweils 20 bis 80 Gew.-%, bezogen auf die Summe von A) und B).

Ist insbesondere eine gute Adhäsion gewünscht, kann ein Anteil von A) von 40 bis 60 Gew.-% und von B) von 60 bis 40 Gew.-% vorteilhaft sein.

Bei der Verwendung als Klebstoff bzw. Schmelzhaftklebstoff werden die Copolymerisate auf die zu verklebenden Substrate durch einfache Verfahren wie Streichen oder Rakeln aufgebracht.

Geeignete Substrate sind z.B. solche aus Holz, Metall, Kunststoff, Stein, Beton, Papier und Textilien aus natürlichen oder synthetischen Fasern oder Leder. Vorzugsweise werden die Copolymerisate auf die Oberflächen beider zu verklebender Substrate aufgebracht.

Gegebenenfalls kann vor der Verklebung eine Aktivierung der beschichteten Substrate z.B. durch Temperaturerhöhung auf 30°C bis 150°C vorteilhaft sein.

Die erfindungsgemäßen Klebstoffe sind vor allem durch ihre gute Adhäsion (guter Tack, hohe Schälfestigkeit) bei ebenfalls guter Kohäsion (gute Scherfestigkeit) gekennzeichnet. Sie können im wesentlichen lösungsmittelfrei verarbeitet werden und benötigen keinen Zusatz von Weichmachern oder klebrigmachenden Harzen (Tackifiern), z.B. Kolophoniumharzen.

### Herstellungsbeispiele

1. Statistisch aufgebautes Styrol/Butadien-Copolymerisat
   In einem 10 1-Rührautoklaven wurden unter N₂ 4762 ml Cyclohexan, 2 ml 1,1-Diphenylethylen (DPE) und 12,7 ml Tetrahydrofuran (THF) bei 25°C mit 0,11 m s-Butyl-Lithium-(s-BuLi)Lösung in Cyclohexan bis zum Farbumschlag nach rot austitriert. Die Lösung wurde mit 142,6 ml (156,9 mmol) einer 1,10 m s-BuLi-Lösung versetzt und einer Mischung aus 660 ml Styrol und 2154 ml Butadien in 10 Portionen zugegeben. Vor Zugabe der jeweils nächsten Portion wurde bis zur Rotfärbung der Reaktionsmischung gewartet. Zum Zeitpunkt der Zugabe wurde die Temperatur auf 65°C eingestellt; sie stieg auf 75°C an. Nach Zugabe der letzten Portion ließ man 20 min bei 70°C nachpolymerisieren und setzte 42,4 g 1,1-Diphenylethylen (1,5-fächer Überschuß bezüglich s-BuLi) zu. Es erfolgte eine Farbvertiefung. Nach 15 min wurde auf 8°C gekühlt und 100 ml THF und 170 ml tert. tert.-Butylmethacrylat zugegeben. Nach 30 min bei 8°C war die Lösung vollständig entfärbt. Es wurde mit 10 ml Isopropanol abgebrochen und mit 0,2 % Irgonax 1076 und 0,2 % Trisnonylphenylphosphit stabilisiert.
   Mₙ (GPC) = 16500.
2. Die Herstellung wurde durchgeführt wie unter 1., jedoch 285,2 ml der s-BuLi-Lösung und 84,8 g 1,1 DPE eingesetzt.
   Mₙ (GPC): 8160
3. Die Herstellung wurde durchgeführt wie unter 1., jedoch 71,3 ml s-BuLi-Lösung und 21,2 g 1,1 DPE eingesetzt.
   Mₙ (GPC): : 32280

### Anwendungstechnische Beispiele

Bei den hergestellten Copolymerisaten bzw. deren Mischungen wurden die Scherfestigkeit, Schälfestigkeit und der Quickstick-Wert von Verklebungen bestimmt.

Eine Polyesterfolie wurde mit 20 g/cm² der Copolymerisate oder deren Mischungen beschichtet.

Der Klebstoff wurde 3 min bei 90°C vor der Verklebung aktiviert.

Das Substrat wurde in Prufstreifen geschnitten.

Zur Bestimmung der Scherfestigkeit wurden die Klebestreifen mit einer verklebten Fläche von 0,5x0,5 Zoll (1,27cm x 1,27cm) auf ein chromiertes V2A-Prüfblech geklebt, mit einer 1 kg schweren Rolle 1 mal gerollt, 20 min gelagert und anschließend hängend mit einem 0,5 kg Gewicht belastet. Das Maß für die Scherfestigkeit war die Zeit bis zum Abfallen des Gewichts; es wurde jeweils der Durchschnitt aus 5 Messungen berechnet. Bei diesen Messungen wurde die Klebeschicht zerstört (Kohäsionsbruch).

Die Scherfestigkeit wurde bei 23°C bestimmt.

Bei der Bestimmung der Schälfestigkeit (Adhäsion) wurde jeweils ein 2 cm breiter Klebestreifen auf ein chromiertes V2A-Prüfblech geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180°C Winkel von der Prüffläche (V2A-Stahl) abgezogen und der dazu benötigte Kraftaufwand gemessen. Das Maß für die Schälfestigkeit war die Kraft in N/2 cm, die sich als Durchschnittswert aus 5 Messungen ergab.

Die Schälfestigkeit wurde nach 1 Minute (Sofortwert) und 20 Minuten nach der Verklebung bestimmt.

Zur Bestimmung des Quickstick-Werts wurde aus einem 17,5 cm langen und 2 cm breiten Prüfstreifen durch Einspannen beider Enden in die Klemmbacken einer Zugmaschiene eine Schlaufe gebildet, die dann mit einer chromierten Stahloberfläche mit einer Geschwindigkeit von 30 cm/min (Herabsenken der Schlaufe auf das chromierte Stahlblech) in Kontakt gebracht wird. Nach vollflächigem Kontakt wird die Schlaufe sofort wieder abgezogen und die dabei ermittelte Maximalkraft in N/2 cm als Maß für den Quickstick-Wert (Schlingenwert, Tack) bestimmt.

Ergebnisse sind in der nachstehenden Tabelle aufgeführt.

| Molgewicht Mₙ (g/mol) | Funktionalität | Quickstick (N/2 cm) | Schälfestigkeit (N/2 cm) | Scherfestigkeit (Stunden) |
|---|---|---|---|---|
| 32.280 | COOH | 1 | 3 | **>96** |
| Mischung 32280+16500 (1:1) | COOH | 5 | **10** | 43 |
| Mischung 32280+8160 (1:1) | COOH | **10** | 8 | 6 |

## Patentansprüche

1. Anionisch polymerisiertes Copolymerisat, aufgebaut aus
a) 10 bis 90 Gew.-% eines Vinylaromaten,
b) 10 bis 90 Gew.-% eines konjugierten Diens und
c) 0 bis 30 Gew.-% weiteren Monomeren,
mit einem zahlenmittleren Molekulargewicht Mₙ von 2.000 bis 250.000 und einem Gehalt an Homopolymerblöcken mit einem Molgewicht größer als ¹/₂₀ des zahlenmittleren Molekulargewichts unter 40 Gew.-%, bezogen auf das Copolymerisat.

2. Copolymerisat gemäß Anspruch 1, wobei das Copolymer keine oder weniger als 20 Gew.-% der Homopolymerblöcke enthält.

3. Copolymerisat gemäß Anspruch 1 oder 2, wobei die Uneinheitlichkeit des Copolymeren ^{Mw}/_{Mn} 1 bis 1,5 beträgt.

4. Copolymerisat gemäß einem der Ansprüche 1 bis 3, enthaltend zusätzlich Carbonsäuregruppen.

5. Verwendung von anionisch polymerisierten Copolymerisaten gemäß einem der Ansprüche 1 bis 4 als Klebstoff.

6. Verwendung von anionisch polymerisierten Copolymerisaten gemäß einem der Ansprüche 1 bis 4 als Haftklebstoff.

7. Verwendung von anionisch polymerisierten Copolymerisaten gemäß einem der Ansprüche 1 bis 4 als Schmelzhaftklebstoff.

8. Mit einem Copolymerisat gemäß einem der Ansprüche 1 bis 4 beschichtete Substrate.

9. Klebstoffe, enthaltend ein Copolymerisat gemäß einem der Ansprüche 1 bis 4.

10. Klebstoffe, enthaltend mindestens 2 anionisch polymerisierte Copolymerisate A) und B) gemäß einem der Ansprüche 1 bis 4, wobei
A) ein Molgewicht Mₙ zwischen 2.000 und 20.000 und
B) ein Molgewicht Mₙ zwischen 20.000 und 250.000
aufweist, das Molgewicht von B) mindestens 5.000 höher ist als das von A) und der Gewichtsanteil von A) und B) jeweils 20 bis 80 Gew.-% bezogen auf die Summe A) + B) beträgt.

11. Klebstoffe gemäß Ansprüche 9 oder 10, wobei diese Klebstoffe im wesentlichen frei sind von zusätzlichen klebrigmachenden Harzen.

12. Klebstoffe gemäß einem der Ansprüche 9 bis 11, wobei diese Klebstoffe im wesentlichen frei sind von Lösungsmitteln und Weichmachern.

## Claims

1. An anionically polymerized copolymer composed of
a) from 10 to 90% by weight of a vinylaromatic compound,
b) from 10 to 90% by weight of a conjugated diene and
c) from 0 to 30% by weight of further monomers,
having a number-average molecular weight Mₙ of from 2,000 to 250,000 and a content of homopolymer blocks having a molecular weight of more than 1/20 of the number-average molecular weight of below 40% by weight, based on the copolymer.

2. A copolymer as claimed in claim 1, which comprises none or less than 20% by weight of the homopolymer blocks.

3. A copolymer as claimed in claim 1 or 2, wherein the polydispersity of the copolymer, M_{w}/Mₙ, is from 1 to 1.5.

4. A copolymer as claimed in one of claims 1 to 3, additionally comprising carboxylic acid groups.

5. The use of anionically polymerized copolymers as claimed in one of claims 1 to 4 as adhesive.

6. The use of anionically polymerized copolymers as claimed in one of claims 1 to 4 as pressure-sensitive adhesive.

7. The use of anionically polymerized copolymers as claimed in one of claims 1 to 4 as hot-melt pressure-sensitive adhesive.

8. Substrates coated with a copolymer as claimed in one of claims 1 to 4.

9. Adhesives comprising a copolymer as claimed in one of claims 1 to 4.

10. Adhesives comprising at least 2 anionically polymerized copolymers A) and B) as claimed in one of claims 1 to 4, where
A) has a molecular weight Mₙ between 2,000 and 20,000 and
B) has a molecular weight Mₙ of between 20,000 and 250,000,
the molecular weight of B) being at least 5,000 higher than that of A) and the proportion by weight of A) and B) being in each case from 20 to 80% by weight, based on the sum A) + B).

11. Adhesives as claimed in claim 9 or 10, which are essentially free from additional tackifying resins.

12. Adhesives as claimed in one of claims 9 to 11, which are essentially free from solvents and plasticizers.

## Revendications

1. Copolymère polymérisé anioniquement, formé à partir de
a) 10 - 90 % en poids d'un composé vinylaromatique
b) 10 - 90 % en poids d'un diène conjugué et
c) 0 - 30 % en poids d'autres monomères,
ayant une masse moléculaire moyenne en nombre Mn de 2000 à 250 000 et une teneur en blocs homopolymères, ayant une masse molaire supérieure au vingtième de la masse moléculaire moyenne en nombre, inférieure à 40 % en poids, par rapport au copolymère.

2. Copolymère selon la revendication 1, où le copolymère ne contient pas de blocs homopolymères ou en contient moins de 20 % en poids.

3. Copolymère selon la revendication 1 ou 2, où l'indice de polymolécularité du copolymère Mw/Mn s'élève à 1 - 1,5.

4. Copolymère selon l'une quelconque des revendications 1 à 3 contenant en outre des groupements acides carboxyliques.

5. Utilisation de copolymères polymérisés anioniquement selon l'une des revendications 1 à 4 en tant qu'adhésif.

6. Utilisation de copolymères polymérisés anioniquement selon l'une des revendications 1 à 4 en tant qu'adhésif de contact.

7. Utilisation de copolymères polymérisés anioniquement selon l'une des revendications 1 à 4 en tant qu'adhésif de contact à chaud.

8. Substrats revêtus d'un copolymère selon l'une des revendications 1 à 4.

9. Adhésifs contenant un copolymère selon l'une des revendications 1 à 4.

10. Adhésifs contenant au moins deux copolymères polymérisés anioniquement A) et B) selon l'une des revendications 1 à 4, où
A) présente une masse molaire Mn entre 2000 et 20 000 et
B) présente une masse molaire Mn entre 20 000 et 250 000,
la masse molaire de B) est supérieure d'au moins 5000 à celle de A) et la proportion en poids de A) et B) s'élève à chaque fois à 20 - 80 % en poids par rapport à la somme A) + B).

11. Adhésifs selon la revendication 9 ou 10, où ces adhésifs sont, pour l'essentiel, exempts de résines supplémentaires à pouvoir collant.

12. Adhésifs selon l'une quelconque des revendications 9 à 11, où ces adhésifs sont, pour l'essentiel, exempts de solvants et de plastifiants.
